# EUROPEAN PATENT APPLICATION

(11) **EP 3 113 437 A1**
(43) Date of publication of application: **04.01.2017**
(21) Application number: 14883901.2
(22) Date of filing: 28.07.2014
(51) Int. Cl.: H04L 29/06, H04W 36/00

(54) **METHOD AND DEVICE FOR ANCHORING MEDIA IN VOICE CALL CONTINUITY SERVICE**

(30) Priority: 28.02.2014 CN 201410073261
(71) Applicant: ZTE Corporation, Guangdong Province 518057 (CN)
(72) Inventor: TU, Qiang, Shenzhen Guangdong 518057 (CN); DENG, Yun, Shenzhen Guangdong 518057 (CN); ZHANG, Lu, Shenzhen Guangdong 518057 (CN)
(74) Representative: Novagraaf Technologies
(86) International application number: PCT/CN2014/083170
(87) International publication number: WO 2015/127756

(57) **Abstract**

Provided are a method and a device for anchoring media in a voice call continuity service. The method includes: dividing media carried in a multimedia type session into a first type of media and a second type of media, wherein the first type of media is media which is supported by an ATGW, and the second type of media is media which is not supported by the ATGW; and anchoring the first type of media to the ATGW and transparently transmitting the second type of media. By means of the technical solution, the technical problems in the related art that it is unable to directly anchor call media due to the fact that an ATCF is probably unable to support all types of media, etc. are solved, so that channels for anchored media can be quickly connected, the voice continuity can be guaranteed, and the user experience can be improved.

## Description

### Technical Field

The present disclosure relates to the field of communications, and in particular to a method and a device for anchoring media in a voice call continuity service.

### Background

The Single Radio Voice Call Continuity (SRVCC) scheme is a continuity scheme put forward by 3^{rd} Generation Partnership Program (3GPP) based on Voice over Long Term Evolution (VoLTE) services, mainly to solve the problem about how to guarantee voice call continuity when single radio User Equipment (UE) moves between a Long Term Evolution (LTE)/Traditional Long Term Evolution (Pre-LTE) network and a Second Generation (2G)/3^{rd} Generation (3G) Circuit Switch (CS) network, that is, to guarantee the smooth transfer of the single radio UE between the Voice over IP (VOIP) controlled by an IP Multimedia Subsystem (IMS) and the CS domain voice. At the initial stage of construction of the LTE network, the coverage is limited. When a user makes a voice call using an LTE network, when he/she moves to an area where the LTE signal is weak but the Global System for Mobile communications Enhanced Data Rate for GSM Evolution radio access network (GERAN)/Universal Mobile Telecommunication System Radio Access Network (UTRAN) signal coverage is better, it is needed to transfer the call from the LTE to GERAN/UTRAN in order to guarantee the Voice Call Continuity (VCC).

VoLTE voice session transferred by Enhanced Single Radio Voice Call Continuity (eSRVCC, defined by 3GPP R10) solves the problem of smooth voice evolution during 4G network upgrade, improves the transfer speed and meanwhile provides an end-to-end voice quality guarantee for VoLTE calls. Compared with the SRVCC technology in 3GPP R8, the eSRVCC technology effectively shortens the media delay for voice transfer and thus improves the user experience. The difference between eSRVCC and SRVCC lies in that the former one adds a pair of functionality entities to the IMS system, namely, Access Transfer Control Functionality (ATCF) and Access Transfer Gateway (ATGW), serving as the anchor point of VoIP call on the control plane and user plane respectively.

In TS 24.292, 3GPP TS 23.237 and 3GPP TS 24.237 and other specifications, there are already signaling and process for implementing transfer between Packet Switched (PS) and CS using the ATCF. However, the related technology has following problems:
if the SRVCC technology is adopted, session transfer has a noticeable time delay, which results in call interruption and poor user experience;
if the eSRVCC technology is adopted to transfer anchor media, as the IMS network supports many types of media streams, besides voice, a call probably further carries video/text/image and the like, however, the media anchoring gateway serving as the ATGW in the network probably cannot support all types of media streams. Based on the related art, the ATCF entity cannot directly anchor call media, but conduct transparent processing only, causing the impossibility of session transfer by an anchoring way and resulting in a noticeable time delay, which results in call interruption and poor user experience.

In view of the above problem, there is no effective solution so far.

### Summary

In view of the technical problems in the related art that it is unable to directly anchor call media due to the fact that an ATCF is probably unable to support all types of media, etc., the embodiments of the present disclosure provide a method and a device for anchoring media in a voice call continuity service, and an ATCF entity, to at least solve the above problems.

To achieve the above purpose, according to one embodiment of the present disclosure, a method for anchoring media in a voice call continuity service is provided, including: dividing media carried in a multimedia type session into a first type of media and a second type of media, wherein the first type of media is media which is supported by an ATGW, and the second type of media is media which is not supported by the ATGW; and anchoring the first type of media to the ATGW and transparently transmitting the second type of media.

In an exemplary embodiment, after anchoring the first type of media to the ATGW and transparently transmitting the second type of media, the method further includes: during session transfer, preferentially transmitting the first type of media.

In an exemplary embodiment, transparently transmitting the second type of media includes: conducting media negotiation for the second type of media; allowing or forbidding to transparently transmit the second type of media according to a media renegotiation result.

In an exemplary embodiment, anchoring the first type of media to the ATGW includes: replacing an Internet Protocol (IP) address and port information of the first type of media with an IP address and port information of anchor media orienting towards a called party.

In an exemplary embodiment, after anchoring the first type of media to the ATGW, the method includes: receiving a session transfer request, wherein the session transfer request carries the first type of media and the second type of media; replacing an IP address and port information of the first type of media carried in the session transfer request with an IP address and port information of the first type of media carried in the multimedia type session; conducting media negotiation for the second type of media carried in the session transfer request; allowing or forbidding to transmit the second type of media carried in the session transfer request according to a media renegotiation result.

In an exemplary embodiment, the method is applied to a video call of PS domain.

In an exemplary embodiment, the first type of media includes audio media, and the second type of media includes video media.

To achieve the above purpose, according to another embodiment of the present disclosure, a device for anchoring media in a voice call continuity service is provided, including: a division component, which is configured to divide media carried in a multimedia type session into a first type of media and a second type of media, wherein the first type of media is media which is supported by an ATGW, and the second type of media is media which is not supported by the ATGW; an anchoring component, which is configured to anchor the first type of media to the ATGW; and a transparent transmission component, which is configured to transparently transmit the second type of media.

In an exemplary embodiment, the device further includes: a transmission component, which is configured to preferentially transmit the first type of media during session transfer.

To achieve the above purpose, according to another embodiment of the present disclosure, an ATCF entity is provided, including: the device for anchoring media described above.

With the technical solution of the embodiments of the present disclosure, the media carried in a multimedia type session is divided into a first type of media which is supported by an ATGW and a second type of media which is not supported by the ATGW, thus, the technical problems in the related art that it is unable to directly anchor call media due to the fact that an ATCF is probably unable to support all types of media, etc. are solved, so that channels for anchored media can be quickly connected, the voice continuity can be guaranteed, and the user experience can be improved.

### Brief Description of the Drawings

For a better understanding of the present disclosure, accompanying drawings described hereinafter are provided to constitute one part of the application; the schematic embodiments of the present disclosure and the description thereof are used to illustrate the present disclosure but to limit the present disclosure improperly. In the accompanying drawings:
Fig. 1 is a flowchart of a method for anchoring media in a voice call continuity service according to an embodiment of the present disclosure;
Fig. 2 is a structure block diagram of a device for anchoring media in a voice call continuity service according to an embodiment of the present disclosure;
Fig. 3 is another structure block diagram of a device for anchoring media in a voice call continuity service according to an embodiment of the present disclosure;
Fig. 4 is a process of separately anchoring media during the establishment of video call of PS domain according to an exemplary embodiment of the present disclosure;
Fig. 5 is a process of separately anchoring media during the renegotiation of video session media of PS domain according to an exemplary embodiment of the present disclosure;
Fig. 6 is a process of an MSC initiating a session transfer carrying audio media during the video call of PS domain according to an exemplary embodiment of the present disclosure;
Fig. 7 is a process of an MSC initiating a session transfer carrying video media during the video call of PS domain according to an exemplary embodiment of the present disclosure;
Fig. 8 is a process of an MSC initiating a session transfer carrying video media and the opposite end getting a change during the video call of PS domain according to an exemplary embodiment of the present disclosure; and
Fig. 9 is a diagram illustrating the media channel connection condition after video session media is separately anchored according to an exemplary embodiment of the present disclosure.

### Detailed Description of the Embodiments

The present disclosure is described below in detail by reference to the accompanying drawings in conjunction with embodiments. It should be noted that the embodiments in the application and the characteristics of the embodiments can be combined if no conflict is caused.

In related art, in order to shorten the session transfer delay, the eSRVCC technology can be adopted to transfer anchor media. However, since the ATCF entity may not be able to support all types of media, that is, the ATCF only supports part types of media, session transfer cannot be performed according to the anchoring way, under such a circumstance, noticeable time delay will occur and the continuity of call cannot be guaranteed. In view of the above problems, following embodiments provide a corresponding solution.

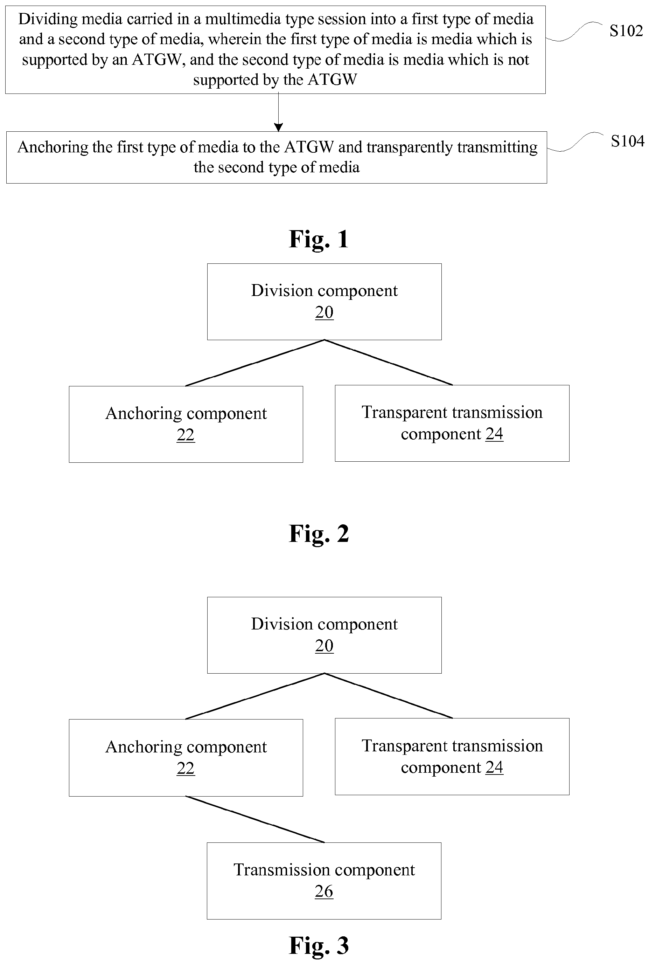

Fig. 1 is a flowchart of a method for anchoring media in a voice call continuity service according to an embodiment of the present disclosure. As shown in Fig. 1, the method includes:
S102: dividing media carried in a multimedia type session into a first type of media and a second type of media, wherein the first type of media is media which is supported by an ATGW, and the second type of media is media which is not supported by the ATGW.
S104: anchoring the first type of media to the ATGW and transparently transmitting the second type of media.

Through the above steps, since the media carried in the multimedia type session is classified, that is, the media is divided into a first type of media which is supported by an ATGW and a second type of media which is not supported by the ATGW, and the first type of media is anchored, channels for anchored media can be quickly connected, ensuing the continuity of call.

After S104, during session transfer, media channels corresponding to the first type of media can be preferentially connected to transmit the first type of media. Of course, before the first type of media is transmitted, media negotiation between the first type of media and the ATGW may be conducted in advance. For the second type of media, a media negotiation also may be conducted, and then the second type of media is allowed for bidden to be transparently transmitted according to a media renegotiation result.

There are many ways to implement S102. In an exemplary implementation of this embodiment, anchoring can be realized through the following way of: replacing an IP address and port information of the first type of media with an IP address and port information of anchor media orienting towards a called party.

When a new call request is received, processing may be made as follows: after anchoring the first type of media to the ATGW, receiving a session transfer request, wherein the session transfer request carries the first type of media and the second type of media; replacing an IP address and port information of the first type of media carried in the session transfer request with an IP address and port information of the first type of media carried in the multimedia type session; conducting media negotiation for the second type of media carried in the session transfer request; allowing or forbidding to transmit the second type of media carried in the session transfer request according to a media renegotiation result.

The anchoring method provided by this embodiment is applicable to a video call of PS domain, in an exemplary embodiment, audio media and video media can be separately anchored, the first type of media may include but not limited to: audio media, text, image and the like; the second type of media may include but not limited to: video media, text, voice, image and the like.

This embodiment also provides a device for anchoring media in a voice call continuity service to implement the above embodiment and exemplary implementations. What has been described will not be repeated here. Components involved in the device are described hereinafter. Term "component" used below can realize the combination of software and/or hardware with scheduled functions. Although the device described in the following embodiments preferably is implemented in the form of software, the implementation in the form of hardware or the combination of software and hardware is possible and conceived. Fig. 2 is a structure block diagram of a device for anchoring media in a voice call continuity service according to an embodiment of the present disclosure. As shown in Fig. 2, the device includes:
a division component 20, which is configured to divide media carried in a multimedia type session into a first type of media and a second type of media, wherein the first type of media is media which is supported by an ATGW, and the second type of media is media which is not supported by the ATGW;
an anchoring component 22, which is coupled with the division component 20 and is configured to anchor the first type of media to the ATGW; and
a transparent transmission component 24, which is coupled with the division component 22 and is configured to transparently transmit the second type of media.

In an exemplary embodiment, as shown in Fig. 3, the above device may further include but not limited to the following processing components: a transmission component 26, which is coupled with the anchoring component 22 and is configured to preferentially transmit the first type of media during session transfer.

This embodiment also provides an ATCF entity, which includes the device for anchoring media in a voice call continuity service described in any embodiment above.

It should be noted that, if the ATCF does not support the above function of this embodiment, call and session transfer will be conducted according to the related art. If the ATGW docked with the ATCF supports the anchoring of all types of media, call and session transfer will be conducted according to the related art.

It should be noted that in this embodiment the "first" and "second" are only to distinguish objects in the perspective of description but to specify the order.

The above embodiments will become readily understandable from the detailed description below taken in conjunction with exemplary embodiments.

The main principle of this embodiment lies in the separate processing of the video part and the audio part in the PS domain video call, that is, anchoring the audio media and transparently transmitting the video media. During session transfer, the audio media is connected first and then renegotiation is performed for the video media.

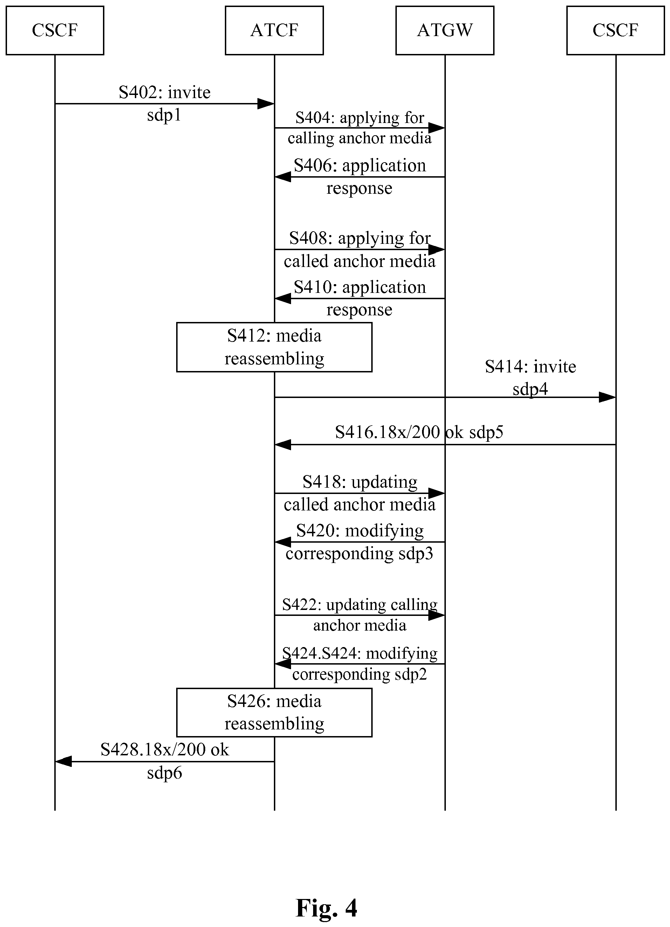

Fig. 4 is a process of separately anchoring media during the establishment of video call of PS domain. In the following process, the video part and the audio part in a video call are separately processed, in particular, the audio media (equivalent to the first type of media) is anchored to the ATGW and the video media (equivalent to the second type of media) is transparently transmitted.

S402: the ATCF receives an initial session request message from a Call Session Control Function (CSCF), the request message carrying a video media sdp1.

S404 to S410: according to the related art, the ATCF indicates the ATGW to apply for an audio media anchor resource, in particular, a video media sdp2 orients towards the calling party and a video media sdp3 orients towards the called party.

S412: assembling the media sdp1 carried in the initial session request and the anchor media sdp3 orienting towards the called party, replacing the IP address and port of the audio media in sdp1 with the IP address and port in sdp3 (adding line c to separately describe the IP of the audio media) and keeping the video media unchanged, to obtain a media sdp4 separately anchored.

### For example

Media sdp1 carried in the initial session request
v=0
c=IN IP4 a.a.a.a
m=audio a1 RTP/AVP 0
m=video a2 RTP/AVP 26

Anchor media sdp3 orienting towards the called party
v=0
c=IN IP4 b.b.b.b
m=audio b1 RTP/AVP 0

Assembling sdp1 and sdp3 to obtain sdp4
v=0
m=audio b1 RTP/AVP 0
c=IN IP4 b.b.b.b
m=video a2 RTP/AVP 26
c=IN IP4 a.a.a.a
   or
v=0
c=IN IP4 a.a.a.a
m=audio b1 RTP/AVP 0
c=IN IP4 b.b.b.b
m=video a2 RTP/AVP 26

S414: the ATCF initiates an initial session request message to the backward CSCF, carrying the separately anchored media sdp4

S416: receiving an 18x or 200OK message carrying a video media from the backward CSCF.

S418 to S424: the ATCF indicates the ATGW to update the remote end of the anchor media, the content being the audio part of the media carried by the calling and called parties.

S426: assembling the media sdp5 carried in the 18x or 200OK response from the called party and the anchor media sdp2 orienting towards the calling party, replacing the IP and port of the audio media in sdp5 with the IP and port in sdp2 (adding line c to separately describe the IP of the audio media) and keeping the video media unchanged, to obtain a separately anchored media sdp6. The assembling method is the same as in S412.

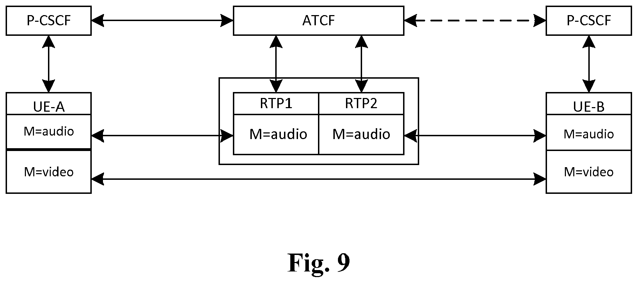

S428: the ATCF sends 18x or 200OK to the calling party CSCF, carrying the separately anchored media sdp6. The connection of media channels after negotiation is as shown in Fig. 9.

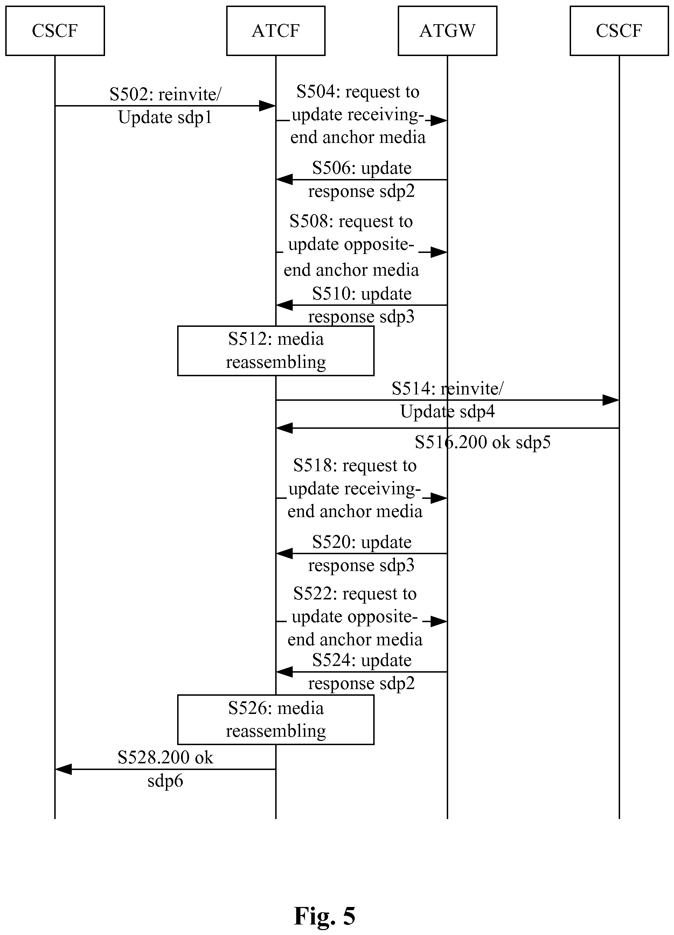

Fig. 5 is a process of separately anchoring media during the renegotiation of video session media of PS domain. The method also anchors the audio media to the ATGW and transparently transmits the video media.

S502: the ATCF receives a media modification request of a call from a CSCF, requesting to carry the video media.

S504 to S510: the ATCF indicates the ATGW to update the remote end of the anchor media, the content being the audio part of the media carried by the calling and called parties.

S512: assembling the media sdp1 carried in the media modification request and the anchor media sdp3 orienting towards the opposite end, replacing the IP and port of the media in sdp1 with the IP and port in sdp3 (adding line c to separately describe the IP of the audio media) and keeping the video media unchanged, to obtain a separately anchored media sdp4. The assembling method is the same as in S412.

S514: the ATCF initiates a media modification request message to the backward CSCF, the request message carrying the separately anchored media sdp4.

S516: receiving a media modification 200OK response message carrying a video media from the backward CSCF.

S518 to S524: the ATCF indicates the ATGW to update the remote end of the anchor media, the content being the audio part of the media carried by the calling and called parties.

S526: assembling the media sdp5 carried in the 200OK response from the called party and the anchor media sdp2 orienting towards the calling party, replacing the IP and port of the media in sdp5 with the IP and port in sdp2 (adding line c to separately describe the IP of the audio media) and keeping the video media unchanged, to obtain a separately anchored media sdp6. The assembling method is the same as in S512.

S528: the ATCF sends a 200OK response message to the calling CSCF, carrying the separately anchored media sdp6.

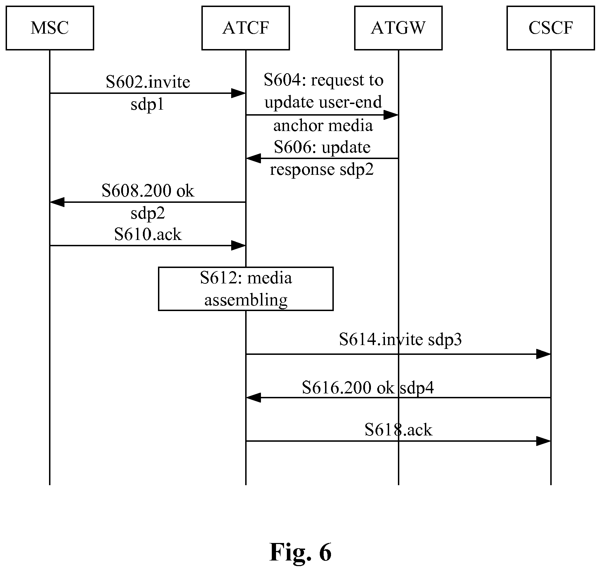

Fig. 6 is a process of an Enhanced Mobile Switch Centre (eMSC) server initiating a session transfer carrying audio media during the video call of PS domain. The method preferentially connects to the audio media and then notifies the opposite end to close the video media.

S602: the ATCF receives a session transfer request message from the eMSC server, only carrying an audio media.

S604 to S610: modifying media and anchoring gateway media, returning a response message to the transferring call, carrying the anchored audio media; the ATCF does not conduct transparent transmission because the transferring call has a different media type than the original PS call.

S612: assembling into a media to be sent to the backward CSCF, in which the audio media is ATGW anchored media, and there is no video media.

S614: the ATCF initiates a session transfer request message to the backward CSCF, the request message carrying the separately anchored media. After receiving the request, the Service Centralization and Continuity Application Server (SCC AS) modifies the opposite-end media and closes the video port.

S616 to S618 is the same as the related art, and no further description is needed here.

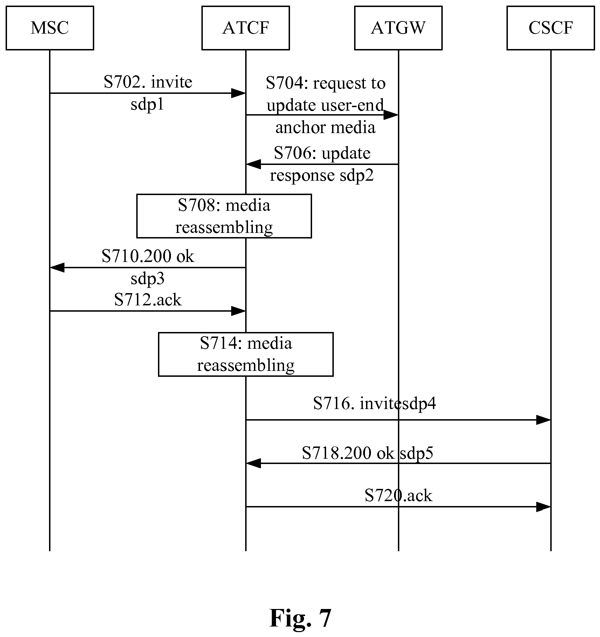

Fig. 7 is a process of an eMSC initiating a session transfer carrying video media during the video call of PS domain. The method preferentially connects to the audio media and then notifies the opposite end to update the video media.

S702: the ATCF receives a session transfer request message from the eMSC server, the request message carrying a video media.

S704 to S706: the ATCF modifies the ATCW anchored audio media.

S708: assembling into a media to respond to the calling party, in which the audio part is ATGW anchored media, the video part is the video part of the opposite-end media of the original PS call. The IP address of each line m of media is still described using multiple m lines and different c lines.

S710 to S712: returning a response message to the transferring call, carrying the separately anchored media, and receiving an ACK response.

S714: assembling into a media to be sent to the backward CSCF, in which the audio part is ATGW anchored media, the video part is the video part of the media carried in the transfer request initiated by the eMSC server. The IP address of each line m of media is still described using multiple m lines and different c lines.

S716: the ATCF initiates a session transfer request message to the backward CSCF, the request message carrying the separately anchored media assembled in S714. After receiving the request, the SCC AS modifies the opposite-end media.

S718 to S720: the same as the related art, judging that in the response received from the backward CSCF the video media does not change, ending the process.

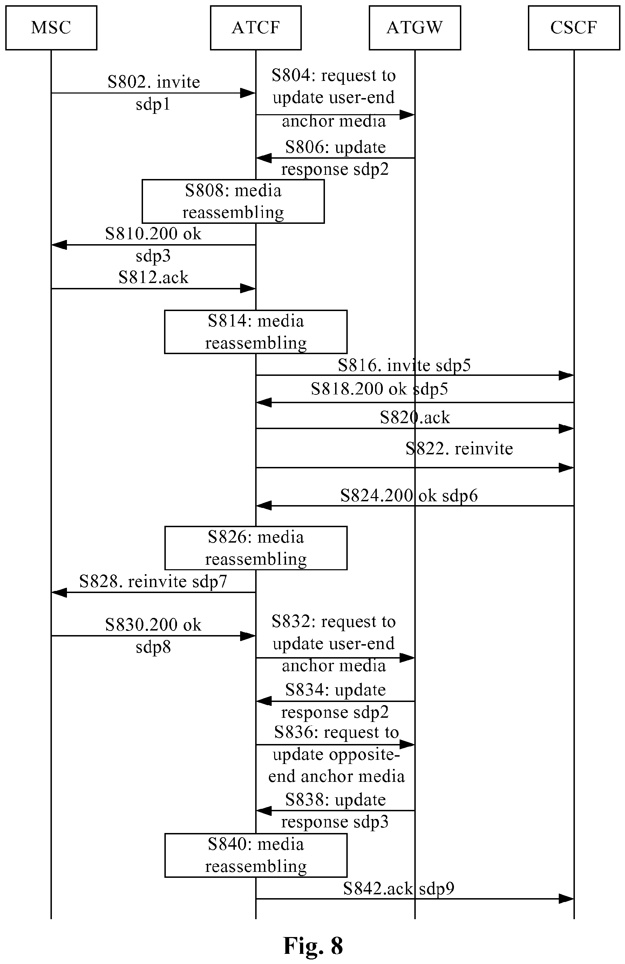

Fig. 8 is a process of an eMSC server initiating a session transfer carrying video media and the opposite end getting a change during the video call of PS domain. The method preferentially connects to the audio media, performs media renegotiation and connects to the video media.

S802: the ATCF receives a session transfer request message from the eMSC server, the request message carrying a video media.

S804 to S806: the ATCF modifies the ATGW anchored audio media.

S808: assembling into a media to respond to the calling party, in which the audio part of the media is ATGW anchored media and the video part is the video part of the opposite-end media of the original PS call. The IP address of each line m of media is still described using multiple m lines and different c lines.

S810 to S812: returning a response message to the transferring call, carrying the separately anchored media, and receiving an ACK response

S814: generating a media to be sent to the backward CSCF, in which the audio part is ATGW anchored media, the video part is the video part of the media carried in the transfer request initiated by the eMSC server. The IP address of each line m of media is still described using multiple m lines and different c lines.

S816: the ATCF initiates a session transfer request message to the backward CSCF, the request message carrying the separately anchored media. After receiving the request, the SCC AS modifies the opposite-end media.

S818 to S820: judging that in the response received from the backward CSCF the media changes. This change contains one or more of the IP/port/coding mode/transceiving mode of the unanchored media.

S822: the ATCF initiates a media modification request not carrying media to the backward CSCF.

S824: receiving a media modification 200OK response from the backward CSCF, carrying media.

S826: separately anchoring the media in the response, in which the audio part is ATGW anchored media and the video part is the video part of the media carried in the 200OK response.

S828: the ATCF initiates a media modification request to the eMSC server, carrying the separately anchored media assembled in S826.

S830: receiving a media modification 200OK response from the eMSC server, carrying media.

S832 to S838: the ATCF modifies the ATGW anchored audio media.

S840: separately anchoring the media in the response, in which the audio part is ATGW anchored media and the video part is the video part of the media carried in the 200OK response.

S842: the ATCF sends a media modification response ACK message to the backward CSCF, carrying the separately anchored media assembled in S840.

S844: the ATCF sends a media modification response ACK message to the eMSC server, not carrying media.

It should be noted that the above process is only the transfer process after response; the transfer process before response, the transfer process in the middle of a call (mid-call) and additional transfer process are similar and are not repeated here.

The non-audio media mentioned in the above process may be video media, or other non-audio media. The separately anchoring method is similar to the transfer process and is not repeated here.

It should be noted that the above embodiments are simply for principle description. Messages between each network element in the embodiments are mainly to clearly illustrate the acquisition of transfer information in the access network and the idea of session transfer. In particular implementation, the present disclosure is not limited to these network elements and messages. For CS-PS transfer process, similar operations can be made. For transfer process in each kind of scenario, similar operations can be made. During implementation, ATCF and ATGW may be integrated or separated. Signalling interaction between ATCF and ATGW may be H.248/MGCP/SIP, or others. For exceptions appearing in each kind of process, the sequence of some messages and the specific implementation inside network elements are not particularly restricted in some cases.

In another embodiment, software is provided, which is configured to execute the technical scheme described in the above embodiments and exemplary implementations.

In another embodiment, a storage medium is provided, which stores the above software, wherein the storage medium includes but not limited to: compact disc, floppy disk, hard disk, erasable memory and the like.

Obviously, those skilled in the art should understand that the components or steps described above can be implemented by a common computer device; the components or steps can be integrated on a single computing device or distributed on a network composed of a plurality of computing devices; optionally, the components or steps can be implemented by a programming code executable by a computing device, thus they can be stored in a storage device to be executed by a computing device and executed in a different order in some cases, or manufactured into individual integrated circuit component respectively, or several of them can be manufactured into a single integrated circuit component to implement; in this way, the present disclosure is not limited to any combination of specific hardware and software.

The above are only the exemplary embodiments of the present disclosure and not intended to limit the present disclosure. For those skilled in the art, various modifications and changes can be made to the present disclosure. Any modification, equivalent substitute and improvement made within the principle of the present disclosure are intended to be included within the scope of protection defined by the appended claims of the present disclosure.

### Industrial Applicability

The technical scheme provided in the embodiments of the present disclosure divides the media carried in a multimedia type session into a first type of media which is supported by an ATGW and a second type of media which is not supported by the ATGW, and thus solves the technical problems in the related art that it is unable to directly anchor call media due to the fact that an ATCF is probably unable to support all types of media, etc., so that channels for anchored media can be quickly connected, the voice continuity can be guaranteed, and the user experience can be improved.

## Claims

1. A method for anchoring media in a voice call continuity service, comprising:
dividing media carried in a multimedia type session into a first type of media and a second type of media, wherein the first type of media is media which is supported by an Access Transfer Gateway, ATGW, and the second type of media is media which is not supported by the ATGW; and
anchoring the first type of media to the ATGW and transparently transmitting the second type of media.

2. The method as claimed in claim 1, wherein after anchoring the first type of media to the ATGW and transparently transmitting the second type of media, the method further comprises:
during session transfer, preferentially transmitting the first type of media.

3. The method as claimed in claim 2, wherein transparently transmitting the second type of media comprises:
conducting media negotiation for the second type of media;
allowing or forbidding to transparently transmit the second type of media according to a media renegotiation result.

4. The method as claimed in claim 1, wherein anchoring the first type of media to the ATGW comprises:
replacing an Internet Protocol, IP, address and port information of the first type of media with an IP address and port information of anchor media orienting towards a called party.

5. The method as claimed in claim 1, wherein after anchoring the first type of media to the ATGW, the method comprises:
receiving a session transfer request, wherein the session transfer request carries the first type of media and the second type of media;
replacing an IP address and port information of the first type of media carried in the session transfer request with an IP address and port information of the first type of media carried in the multimedia type session;
conducting media negotiation for the second type of media carried in the session transfer request;
allowing or forbidding to transmit the second type of media carried in the session transfer request according to a media renegotiation result.

6. The method as claimed in any one of claims 1 to 5, wherein the method is applied to a video call of Packet Switched, PS, domain.

7. The method as claimed in any one of claims 1 to 5, wherein the first type of media comprises audio media, and the second type of media comprises video media.

8. A device for anchoring media in a voice call continuity service, comprising:
a division component, which is configured to divide media carried in a multimedia type session into a first type of media and a second type of media, wherein the first type of media is media which is supported by an Access Transfer Gateway, ATGW, and the second type of media is media which is not supported by the ATGW;
an anchoring component, which is configured to anchor the first type of media to the ATGW; and
a transparent transmission component, which is configured to transparently transmit the second type of media.

9. The device as claimed in claim 8, further comprising:
a transmission component, which is configured to preferentially transmit the first type of media during session transfer.

10. An Access Transfer Control Functionality, ATCF, entity, comprising the device for anchoring media described in claim 8 or 9.
